**Europäisches Patentamt**

**European Patent Office**

**Office européen des brevets**

(19)

(11) Veröffentlichungsnummer: **0 182 082**
**B1**

(12) **EUROPÄISCHE PATENTSCHRIFT**

(45) Veröffentlichungstag der Patentschrift:
**20.09.89**

(21) Anmeldenummer: **85112965.0**

(22) Anmeldetag: **12.10.85**

(51) Int. Cl.⁴: **G 01 F  1/22**, G 01 F  1/24,
G 01 F 25/00

(54) **Dosierkontrolleinrichtung.**

(30) Priorität: **19.10.84 DE 3438405**

(43) Veröffentlichungstag der Anmeldung:
**28.05.86 Patentblatt 86/22**

(45) Bekanntmachung des Hinweises auf die Patenterteilung: **20.09.89 Patentblatt 89/38**

(84) Benannte Vertragsstaaten:
**AT BE CH DE FR GB IT LI NL**

(56) Entgegenhaltungen:
CH–A–  489 789
CH–A–  640 939
DD–A–  124 841
DE–A– 2 924 235
DE–A– 3 015 421
US–A– 3 931 737

(73) Patentinhaber: **LANG APPARATEBAU GMBH**
**Raiffeisenstrasse 7**
**D-8221 Siegsdorf/Obb. (DE)**

(72) Erfinder: **Bödecker, Kay**
**Lindenstrasse 20**
**D-8224 Chieming (DE)**
Erfinder: **Eichner, Walter**
**Hauertinger Strasse 1**
**D-8227 Siegsdorf (DE)**
Erfinder: **Helminger, Karl**
**Ulrichshögel 6**
**D-8229 Ainring 1 (DE)**
Erfinder: **Huber, Wolfgang**
**Brunnweg 7**
**D-8221 Bergen (DE)**

(74) Vertreter: **Härle, Horst, Dr. et al**
**c/o Henkel KGaA TFP/Patentabteilung Postfach 1100**
**Henkelstrasse 67**
**D-4000 Düsseldorf (DE)**

## Beschreibung

Die Erfindung richtet sich auf eine Dosierkontrolleinrichtung einer Dosieranlage mit Signalgabe bei Fehlfunktion in der Dosiermenge oder an der Dosierstelle mit einer im Strömungsweg des zu dosierenden Produkts der Strömung entgegengerichtet abgefedert gelagerten Kolben-Zylinder-Anordnung mit Überwachung der Relativstellung des Kolbens, wobei die auf den Kolben entgegen der Produktströmung wirkende Federkraft kleiner als die von einer ungestörten Produktströmung auf den Kolben ausgeübte Kraft ist und der Kolben bei Normalbetrieb entgegen der Kraft der Feder auf einen Anschlag zu bewegt wird.

Eine derartige Dosierkontrolleinrichtung ist aus der DD-A-124 841 bekannt. Bei dieser ist der Kolben mit einem Umlauf- oder Durchflußraum versehen.

Weiterhin ist aus der CH-A-489 789 ein Durchflußmengenmesser mit Kolben-Zylinder-Anordnung und einer Vorrichtung zur Überwachung der Kolbenstellung bekannt, bei welcher der Kolben aus einem Kolbenkopf und daran anschließender Stange besteht.

Aus der DE-A-2 924 235 ist ein Schwebekörper-Durchflußmesser mit einer Einrichtung zur Signalgabe für die Stellung des Schwebekörpers in einem Meßrohr bekannt.

Schließlich ist aus der DE-A-3 015 421 ein Durchflußmeßgerät mit einem in einem hohlzylindrischen Körper entgegen der Kraft einer Feder axial verschiebbaren Steuerglied bekannt, das zugleich als Rückschlagventil ausgebildet ist.

Aus verfahrenstechnischen Gründen ist es beispielsweise bei der Wassernachbehandlung erforderlich, den Betrieb der verwendeten Dosierpumpe nachzuweisen, da selbst kurzfristig nicht oder falsch behandeltes Wasser den Verfahrenserfolg in Frage stellt. Bei hydraulischen Dosiergeräten gibt es nur die Möglichkeit, eine relativ aufwendige Überprüfung des Gerätes vorzunehmen. Bei elektrisch bzw. elektronisch oder magnetisch arbeitenden Dosiergeräten können zusätzliche Informationen durch Überprüfen der vollen Umdrehung des Antriebsmotors abgenommen und in einer bereits vorgeschlagenen Elektronikschaltung ausgewertet werden. Kann aber die Dosierpumpe nicht mehr fördern, weil beispielsweise Dichtelemente oder dergleichen ausgefallen sind oder das Impfventil verstopft ist, können die Elektronik-Information mit Hilfe der vorgenannten Geräte und Anlagen nicht permanent erhalten und verarbeitet werden.

Der Erfindung liegt die Aufgabe zugrunde, ein einfach ausgebildetes und wenig aufwendiges Überwachungssystem zu schaffen, das es auch erlaubt, ausgefallene Dichtelemente oder verstopfte Impfventile zu registrieren und eine exakte Abstimmung der Dosierkontrolle selbst bei sehr kleinen Dosiermengen, insbesondere im ppm-Bereich bei der Wassernachbehandlung, zu gewährleisten.

Bei einer Dosierkontrolleinrichtung der eingangs bezeichneten Art wird diese Aufgabe gemäß der Erfindung dadurch gelöst, daß der Kolben aus einer in einem Zylinder geführten Kolbenstange und einem in einem Zylinder geführten sich in der Strömungsrichtung an die Stange anschließenden Kolbenkopf besteht, wobei der Kolbenkopf Abflachungen oder Nuten für einen ungehinderten Produktdurchlaß aufweist und der Produktdurchflußquerschnitt im Bereich zwischen Zylinder und Kolbenstange als schmaler, für einen Druckausgleich an den Kolbenenden gerade ausreichender Spalt am Kolbenumfang ausgebildet ist.

Erfindungsgemäß wird ausgenutzt, daß bei Betrieb der Dosierpumpe und Vorhandensein von Produkt eine Strömung in Richtung auf das Impfventil vorhanden sein muß. Die Dosierkontrolleinrichtung soll so eingestellt werden, daß die auf den Kolben entgegen der Produktströmung wirkende Federkraft kleiner als die von einer ungestörten Produktströmung auf den Kolben ausgeübte Kraft ist. Bei ordnungsgemäß arbeitender Dosieranlage befindet sich also der Kolben in einer Stellung mit im wesentlichen maximal belasteter Feder, während diese Feder den Kolben bei aus irgendeinem Grunde zu geringer oder ausgefallener Produktströmung in eine der ersteren Position entgegengesetzte Stellung verschiebt. Es ist daher beispielsweise durch optische oder elektro-optische Überwachung der Relativstellung von Kolben und Zylinder möglich, die Funktion einer Dosieranlage zu kontrollieren.

Der Kolben besteht aus einer in dem Zylinder eingeführten Kolbenstange und einem sich in der Betriebsströmungsrichtung an die Kolbenstange anschließenden Kolbenkopf. Zum freien Durchgang sind an Kolbenkopf Nuten oder Flächen angebracht. Der Durchgangsquerschnitt des Spaltes zwischen Kolben und Zylinder soll bei Pumpenstillstand oder zu geringer Strömung für einen Druckausgleich ausreichen, aber in der normalen Betriebsströmung einen so großen Widerstand bilden, daß die Strömung den Kolben gegen die Federkraft, vorzugsweise bis zu einem Anschlag, vorschiebt.

Gemäß weiterer Erfindung kann am anderen Längsende des Kolbenwegs, vorzugsweise an einem den Ausfall der Produktströmung anzeigenden Anschlag, ein Dichtring vorgesehen werden, der den Durchgang zwischen Kolbenkopf und Zylinder bei fehlender Strömung oder Rückschlag sperrt, derart, daß die erfindungsgemäße Dosierkontrolleinrichtung zugleich als Rückschlag- bzw. Druckhalteventil wirkt.

Bei Verwendung der erfindungsgemäßen Einrichtung als optisches Überwachungssystem können der Zylinder bzw. das Gehäuse der Anlage durchsichtig oder durchscheinend ausgebildet und der Kolben demgegenüber undurchsichtig bzw. farbig abgesetzt werden. Die Funktion der Einrichtung kann dann jederzeit mit bloßem Auge oder aber auch mit einer Lichtschranke mit opto-elektronischem Sender und Empfänger überwacht werden. Anstelle einer optischen Kontrolle kommt auch ein mechanisches, elektrisches oder magnetisches Erfassen der Relativstellung von Kolben und Zylinder in Frage.

Anhand der schematischen Darstellung von Ausführungsbeispielen werden Einzelheiten der Erfindung erläutert. Es zeigen :

Fig. 1 eine Längsschnitt durch eine Dosierkontrolleinrichtung ; und

Fig. 2 einen Längsschnitt durch eine zugleich als Rückschlag- und Druckhalteventil ausgebildete Dosierkontrolleinrichtung.

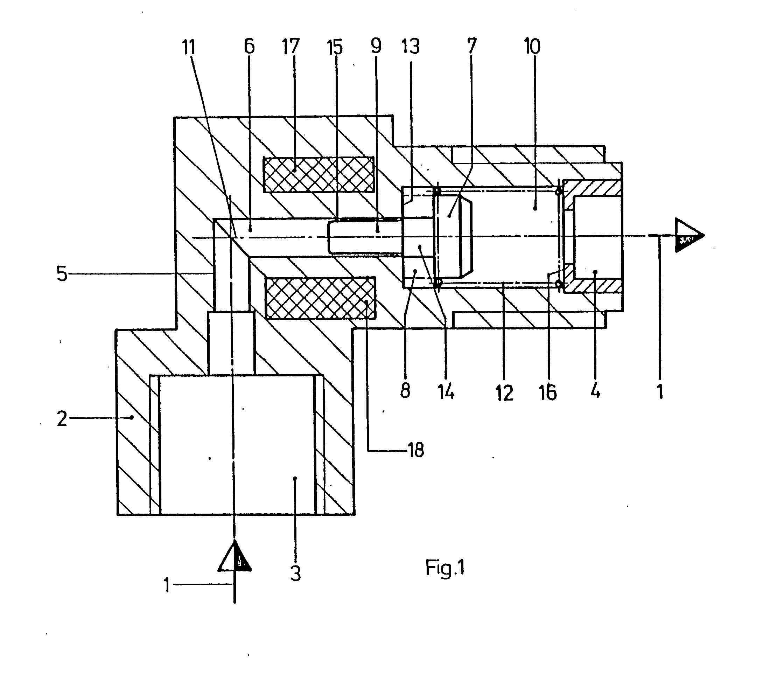

Im Ausführungsbeispiel nach Fig. 1 führt der durch Pfeile gekennzeichnete Strömungsweg 1 durch ein insgesamt mit 2 bezeichnetes, vorzugsweise durchsichtiges Gehäuse. Das Gehäuse 2 besitzt einen der (nicht gezeichneten) Dosierpumpe zugewendeten Einlaß 3 und einen dem (ebenfalls nicht gezeichneten) Impfventil zugewendeten Auslaß 4. Der Strömungsweg 1 führt durch einen insgesamt mit 5 bezeichneten Kanal vom Einlaß 3 zum Auslaß 4. Der Kanal 5 wird zumindest auf einem Teil seiner Länge als Zylinder 6 eines insgesamt mit 7 bezeichneten Kolbens ausgebildet. Der Kolben 7 besteht z. B. aus einem Kolbenkopf 8 und einer Kolbenstange 9. Der Kolben 7 wird im Zylinder 6 und Zylinder 10 in Längsrichtung 11 verschiebbar gelagert. Innerhalb des Zylinders 10 wirkt auf den Kolbenkopf 8 eine Feder 12 derart, daß des Kolbenkopf 8 entgegen der Pfeilrichtung des Strömungswegs 1 an einen ersten Anschlag 13 gedrückt wird.

Durch Abflachungen oder Nuten 14 am Kolbenkopf 8 kann das zu dosierende Medium praktisch ungehindert zwischen Kolbenkopf 8 und Zylinder 10 fließen. Demgegenüber wird der Durchflußquerschnitt des Produktdurchgangs im Bereich der kolbenstange 9, als Spalt 15 zwischen Kolbenstange 9 und Zylinder 6, so gering gewählt, daß bei dem vorgegebenen Normalbetrieb der Dosiereinrichtung die Kolbenstange 9 und damit der ganze Kolben 7 in der gezeichneten Pfeilrichtung entgegen der Kraft der Feder 12 auf einen dem ersten Anschlag 13 gegenüberliegenden zweiten Anschlag 16 zubewegt wird.

Nach Arbeitsbeginn der dem Einlaß 3 vorgeschalteten Dosierpumpe drückt das strömende Produkt den Kolben 7 gegen die Kraft der Feder 12 in Richtung auf den zweiten Anschlag 16. Wenn die Strömung aus irgendeinem Grunde gestört ist, stellt sich über den Spalt 15 am Umfang der Kolbenstange 9 auf beiden Kolbenseiten etwa gleicher Druck ein, so daß der Kolben 7 durch die Kraft der Feder 12 wieder in Richtung auf den, einen Pumpenstillstand anzeigenden ersten Anschlag 13 bewegt wird.

Die jeweilige Stellung des Kolbens 7 kann bei durchsichtigem Gehäuse 2 und undurchsichtigem, insbesondere gefärbtem Kolben 7 mit bloßem Auge beobachtet werden. Die jeweilige Endlage läßt sich aber auch automatisch kontrollieren. Hierzu eignen sich opto-elekronische Elemente mit Sender 17 und Empfänger 18, die beispielsweise die Position des Längsendes der Kolbenstange 9 nach Art einer Lichtschranke erfassen und an eine übergeordnete Elektronik weiterleiten.

Der Kolben ist im kleinen und großen Zylinder geführt. Durch Abflachungen bzw. Nuten am Kolbenkopfquerschnitt ist ungehinderter Durchgang möglich. Durch den Spalt zwischen Kolbenstange und kleinem Zylinder stellt sich bei Pumpenstillstand Druckausgleich ein.

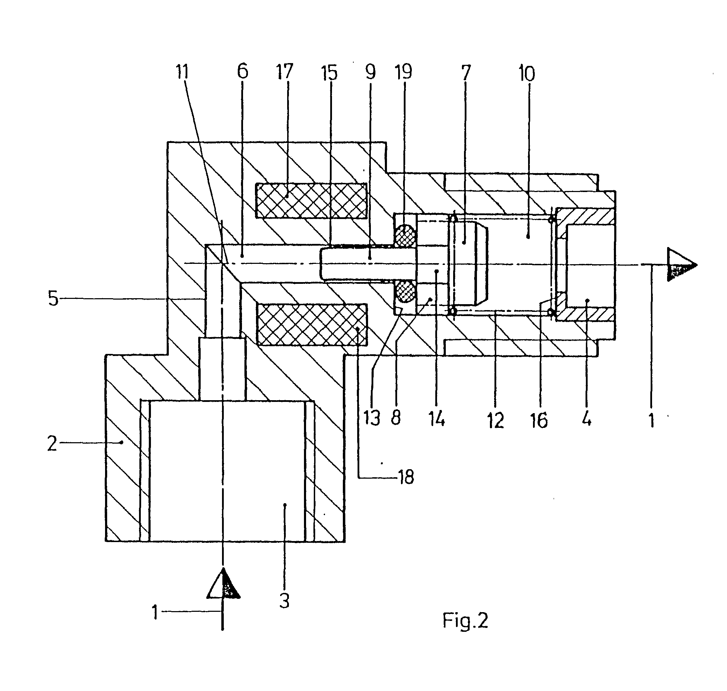

Im Ausführungsbeispiel nach Fig. 2 werden im wesentlichen dieselben Elemente wie in Fig. 1 verwendet. Die Bezugsziffern wiederholen sich daher. Das Besondere der Vorrichtung nach Fig. 2 besteht darin, daß der Strömungsweg 1 bei Anliegen des Kolbenkopfes 8 am Anschlag 13 durch einen die Kolbenstange 9 umfassenden Dichtring 19 zu sperren ist. Die erfindungsgemäße Dosierkontrolleinrichtung wird dadurch zugleich als Rückschlag- und Druckhalteventil ausgebildet.

Bei der erfindungsgemäßen Dosierkontrolle wird lediglich die Strömungsstärke des zu dosierenden Produkts überprüft. Das System arbeitet weitgehend druckunabhängig.

Die gegebenenfalls für die Dosierkontrolleinrichtung erfoderlichen elektronischen Schalt-, Steuer- und Anzeigeelemente können in ein- und demselben Gehäuse wie die Kolben-Zylinder-Anordnung untergebracht werden. Auf diese Weise läßt sich eine komplette Dosierüberwachungseinheit schaffen, die in den Strömungsweg des zu dosierenden Produkts einzubauen ist.

**Patentansprüche**

1. Dosierkontrolleinrichtung einer Dosieranlage mit Signalgabe bei Fehlfunktion in der Dosiermenge oder an der Dosierstelle mit einem im Strömungsweg (1) des zu dosierenden Produkts der Strömung entgegengerichtet abgefedert (12) gelagerten Kolben (7) einer Kolben-Zylinder-Anordnung mit Überwachung der Relativstellung des Kolbens (7), wobei die auf den Kolben (7) entgegen der Produktströmung wirkende Federkraft (12) kleiner als die von einer ungestörten Produktströmung auf den Kolben ausgeübte Kraft ist und der Kolben (7) bei Normalbetrieb entgegen der Kraft der Feder (12) auf einen Anschlag (16) zubewegt wird, dadurch gekennzeichnet, daß der Kolben (7) aus einer in einem Zylinder (6) geführten Kolbenstange (9) und einem in einem Zylinder (10) geführten, sich in der Strömungsrichtung an die Stange anschließenden Kolbenkopf (8) besteht, wobei der Kolbenkopf (8) Abflachungen oder Nuten (14) für einen ungehinderten Produktdurchfluß aufweist und der Produktdurchflußquerschnitt im Bereich zwischen Zylinder (6) und Kolbenstange (9) als schmaler, für einen Druckausgleich an den Kolbenenden gerade ausreichender Spalt (15) am Kolbenumfang ausgebildet ist.

2. Dosierkontrolleinrichtung nach Anspruch 1, gekennzeichnet durch die Ausbildung als Rückschlag- und Druckhalteventil mit einem Dichtring (19) zum Verschließen des Durchgangs zwischen Kolben (7) und Zylinder (6) bei zu geringem Druck bzw. fehlender Strömung oder bei Rückschlag.

3. Dosierkontrolleinrichtung nach einem der vorangehenden Ansprüche, gekennzeichnet durch eine optische oder elektro-optische Überwachung der Relativstellung von Kolben (7) und Zylinder (6).

4. Dosierkontrolleinrichtung nach einem der vorangehenden Ansprüche, dadurch gekennzeichnet, daß der Zylinder (6) bzw. das Gehäuse der Anlage durchsichtig und der Kolben (7) demgegenüber undurchsichtig bzw. farbig abgesetzt ist.

5. Dosierkontrolleinrichtung nach einem der vorangehenden Ansprüche, dadurch gekennzeichnet, daß zum optischen Überwachen eine Anordnung mit opto-elektronischem Sender (17) und Empfänger (18) vorgesehen ist.

6. Dosierkontrolleinrichtung nach einem der vorangehenden Ansprüche, gekennzeichnet durch Mittel zum mechanischen, elektrischen oder magnetischen Erfassen der Relativstellung von Kolben (7) und Zylinder (6).

## Claims

1. Metering check equipment of a metering installation with signal delivery on malfunction in the metered quantity or at the metering point with a piston (7), which is borne in the flow path (1) of the product to be metered and spring-loaded (12) against the direction of the flow, of a piston-cylinder arrangement with monitoring of the relative setting of the piston (7), wherein the spring force (12) acting on the piston (7) against the product flow is smaller than the force exerted on the piston by an undisturbed product flow and the piston (7) in normal operation is moved towards an abutment (16) against the force of the spring (12), characterised thereby, that the piston (7) consists of a piston rod (9) guided in a cylinder (6) and a piston head (8), which is guided in a cylinder (10) and adjoins the rod in the direction of the flow, wherein the piston head (8) displays flattenings or grooves (14) for an unhindered product throughflow and the product throughflow cross-section in the region between cylinder (6) and piston rod (9) is formed as narrow gap (15), just sufficing for a pressure equalisation at the piston ends, at the piston circumference.

2. Metering check equipment according to claim 1, characterised by the construction as non-return and pressure-maintaining valve with a sealing ring (19) for closure of the passage between piston (7) and cylinder (6) in case of too low a pressure or absent flow or reserve flow.

3. Metering check equipment according to one of the preceding claims, characterised by an optical or electro-optical monitoring of the relative setting of piston (7) and cylinder (6).

4. Metering check equipment according to one of the preceding claims, characterised thereby, that the cylinder (6) or the housing of the installation is transparent and the piston (7) opposite thereof is opaque or stepped in colour.

5. Metering check equipment according to one of the preceding claims, characterised thereby, that an arrangement with opti-electronic transmitter (17) and receiver (18) is provided for the optical monitoring.

6. Metering check equipment according to one of the preceding claims, characterised by means for the mechanical, electrical or magnetic detection of the relative setting of piston (7) and cylinder (6).

## Revendications

1. Dispositif contrôleur d'une installation de dosage, avec émission d'un signal en cas de fonctionnement défectueux, comportant, sur le parcours d'écoulement (1) un produit à doser, un piston (7), monté sur un ressort (12) dans le sens inverse de l'écoulement, faisant partie d'un dispositif piston-cylindre, avec surveillance de la position relative du piston (7) ; la force du ressort (12), agissant sur le piston (7) en sens inverse de l'écoulement du produit, étant inférieure à la force exercée sur le piston par un courant de produit non perturbé et le piston (7) étant amené, en service normal, contre la butée (16), dispositif caractérisé par le fait que le piston (7) est constitué par une tige (9), guidée dans un cylindre (6), et une tête de piston (8), guidée dans un cylindre (10), et se rattachant à la tige (9) dans le sens de l'écoulement, la tête de piston (8) présentant des méplats ou des rainures (14) pour permettre un passage sans obstacle du produit, et la section de passage du produit étant réalisée, dans la région comprise entre le cylindre (6) et la tige de piston (9), sous la forme d'une fente, pratiquée sur la périphérie (15) du piston, juste suffisante pour équilibrer la pression aux extrémités de ce dernier.

2. Dispositif contrôleur de dosage selon la revendication 1, caractérisé par le fait qu'il comporte un ensemble de clapet, sous forme de claper anti-retour, et de retenue de pression, avec un anneau d'étanchéité (19) adapté pour boucher le passage entre le piston (7) et le cylindre (6) en cas de pression trop faible, de défaut d'écoulement ou d'écoulement en retour.

3. Dispositif contrôleur de dosage selon l'une ou l'autre des revendications 1 ou 2, caractérisé par le fait qu'il comporte un moyen de surveillance optique, ou électro-optique, de la position relative du piston (7) et du cylindre (6).

4. Dispositif contrôleur de dosage selon l'une quelconque des revendications 1 à 3, caractérisé par le fait que le cylindre (6), ou logement du dispositif, est transparent tandis que le piston (7), opposé, est opaque ou en couleurs.

5. Dispositif contrôleur de dosage selon l'une quelconque des revendications 1 à 4, caractérisé par le fait qu'il comporte un dispositif émetteur opto-électronique (17) et réception (18) prévu pour permettre la surveillance optique.

6. Dispositif contrôleur de dosage selon l'une quelconque des revendications 1 à 5, caractérisé par le fait qu'il comporte des moyens mécaniques, électriques ou magnétiques de perception de la position relative du piston (7) et du cylindre (6).

Fig.1

EP 0 182 082 B1

Fig.2